(19) **Europäisches Patentamt / European Patent Office / Office européen des brevets**

(11) **EP 4 679 144 A1**

(12) **EUROPEAN PATENT APPLICATION**
published in accordance with Art. 153(4) EPC

(43) Date of publication:
**14.01.2026 Bulletin 2026/03**

(21) Application number: **24771136.9**

(22) Date of filing: **08.03.2024**

(51) International Patent Classification (IPC):
**G02B 5/00** *(2006.01)*　　**G02B 5/08** *(2006.01)*
**H04N 23/55** *(2023.01)*　　**H04N 23/57** *(2023.01)*
**H04N 23/54** *(2023.01)*　　**G03B 17/12** *(2021.01)*
**G03B 30/00** *(2021.01)*　　**G03B 17/17** *(2021.01)*
**G02B 7/02** *(2021.01)*

(52) Cooperative Patent Classification (CPC):
**G02B 5/00; G02B 5/08; G02B 7/02; G03B 17/12;
G03B 17/17; G03B 30/00; H04N 23/54;
H04N 23/55; H04N 23/57**

(86) International application number:
**PCT/KR2024/003041**

(87) International publication number:
**WO 2024/191136 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.03.2023 KR 20230032058
24.03.2023 KR 20230038860**

(71) Applicant: **LG INNOTEK CO. LTD**
**Gangseo-gu**
**Seoul 07796 (KR)**

(72) Inventors:
• **MOON, Sung Min**
  **Seoul 07796 (KR)**
• **LEE, Jin Hyoung**
  **Seoul 07796 (KR)**

(74) Representative: **DREISS Patentanwälte PartG
mbB**
**Friedrichstraße 6**
**70174 Stuttgart (DE)**

(54) **CAMERA MODULE AND ELECTRONIC DEVICE HAVING SAME**

(57)　A camera module disclosed in an embodiment of the invention comprises: a reflective member for reflecting, in a second direction, light incident in a first direction; a lens holder having a plurality of lenses aligned along the second direction; an image sensor that converts light refracted through the plurality of lenses into an electrical signal; and a plurality of spacers disposed on an outer periphery between adjacent two lenses, wherein the plurality of spacers include a first spacer arranged on a periphery of an object-side surface or a sensor-side surface of an n-th or n-1-th lens adjacent to the image sensor, and a shape of a hole of the first spacer may be non-circular.

EP 4 679 144 A1

【FIG. 3】

**Description**

[Technical Field]

The invention relates to a camera module and an electronic device having the same.

[Background Art]

Camera module performs the function of capturing objects and saving them as images or videos, and are installed in various applications. In particular, camera modules are manufactured in an ultra-small size and are applied to portable devices such as smartphones, tablet PCs, and laptops, as well as drones and vehicles, providing various functions. For example, the optical system of a camera module may include an imaging lens that forms an image, and an image sensor that converts the formed image into an electrical signal. At this time, the camera module may perform an auto-focusing (AF) function that automatically adjusts a distance between the image sensor and the imaging lens to align the focal length of the lens, and may perform a zooming function of zooming up or zooming out to capture a distant object by increasing or decreasing the magnification through a zoom lens. In addition, the camera module employs image stabilization (IS) technology to correct or prevent shaking of the image caused by camera movement due to an unstable fixture or the user's movement.

The most important element for a camera module to obtain an image is the lens that forms the image. Recently, interest in high resolution has been increasing, and research is being conducted on an optical system that includes multiple lenses to achieve this. Camera modules with image sensors such as CCD (Charge coupled device) or CMOS (Complementary metal oxide semiconductor image sensor) place filters with various optical functions (optical filters) between the lenses and the image sensors to obtain clear images while reproducing color tones well. A representative example is an optical filter (near-infrared cut filter) that blocks light in the near-infrared wavelength range in order to correct the spectral sensitivity of the image sensor to human visual sensitivity, and the optical filter is disposed between the last lens and the image sensor. Such a camera module has multiple lenses stacked on top of each other, and light passing through the multiple lenses may be collected by the image sensor and stored as data in the memory within the device. However, since flare phenomena such as light scattering can occur due to reflection and scattering of light incident on the camera module, which can negatively affect image quality, it is necessary to block unnecessary light from traveling to the image sensor. Therefore, a new camera module capable of solving the aforementioned problems is required.

[Disclosure]

[Technical Problem]

An embodiment of the invention provides a camera module comprising a spacer having a non-circular hole on the object-side or sensor-side surface of a lens within a movable lens group. Preferably, the camera module comprises a spacer having a non-circular hole disposed between non-circular lenses. An embodiment of the invention provides a camera module comprising a spacer having a non-circular hole disposed on the object-side or sensor-side surface of a non-circular lens.

An embodiment of the invention provides a camera module having a pattern for reflecting, absorbing, or scattering light traveling along an abnormal path among light traveling through a reflective member to a plurality of lenses. An embodiment of the invention further provides a camera module capable of blocking flare by further arranging a light-shielding member around at least one of incident and exit surfaces of an incident-side reflective member. An embodiment of the invention can improve the reliability of a folded camera module.

[Technical Solution]

A camera module according to an embodiment of the invention may comprise a reflective member for reflecting, in a second direction, light incident from a first direction; a lens holder having a plurality of lenses aligned in the second direction; an image sensor for converting the light refracted through the plurality of lenses into an electrical signal; and a plurality of spacers each disposed on an outer peripheries between two adjacent lenses, wherein the plurality of spacers include a first spacer disposed on the periphery of an object-side surface or a sensor-side surface of an n-th or n-1th lens adjacent to the image sensor, and a hole shape of the first spacer may be non-circular.

According to an embodiment of the invention, the first spacer is disposed on the periphery of the object-side surface of the n-th lens, and the object-side surface and the sensor-side surface of the n-th lens may have effective lengths in a first direction that is less than effective lengths in a third direction orthogonal to the first direction.

According to an embodiment of the invention, the object-side surface and the sensor-side surface of the n-1th lens may have effective lengths in the first direction that are smaller than effective lengths in the third direction orthogonal to the first direction. The first spacer is disposed on the periphery of the object-side surface of the n-1th lens, and the object-side surface and the sensor-side surface of the n-1th lens may have effective lengths in the first direction that are smaller than effective lengths in the third direction orthogonal to the first direction.

According to an embodiment of the invention, the first spacer is disposed on the periphery of the sensor-side surface of the n-th lens, and the object-side surface and the sensor-side surface of the n-th lens may have effective lengths in the first direction that are smaller than effective lengths in a third direction orthogonal to the first direction.

According to an embodiment of the invention, a maximum effective length of the object-side surface or the sensor-side surface of the n-th or n-1th lens is C1, a minimum effective length is C2, and the following Mathematical formula may satisfy: $0.55 < C2 / C1 < 0.98$. A maximum length of an outer shape of the first spacer is D1, a minimum length is D2, and the following Mathematical formula may satisfy: $0.55 < D2 / D1 < 0.98$. The hole of the first spacer has the maximum length D3, the minimum length D4, and the following Mathematical formula may satisfy: $0.55 < D4 / D3 < 0.98$. The maximum effective length of the object-side surface of the lens closest to the reflective member among the plurality of lenses is CA11, the maximum effective length of the sensor-side surface of the n-th lens is CA32, and the following Mathematical formula may satisfy: $0.55 < CA32 / CA11 < 0.9$.

According to an embodiment of the invention, the maximum effective length of the object-side surface of the lens closest to the reflective member may be the largest among the effective lengths of the lenses. An optical axis distance between the sensor-side surface of the n-th lens and the image sensor is BFL, and the following condition may satisfy: 2 mm < BFL < 10 mm. The effective focal length of the camera module is EFL, and the following condition may satisfy: 7 mm < EFL < 35 mm.

According to an embodiment of the invention, the plurality of lenses may include a first lens group adjacent to the reflective member and having at least one lens; a second lens group having at least one lens on the sensor side of the first lens group and movable along the optical axis; and a third lens having the n-th and n-1th lenses on the sensor side of the second lens group and movable along the optical axis. The length of the hole of the spacer in the short axis direction is D0, a length of the image sensor in the first direction is V1, and the following Mathematical formula may satisfy: $0.6 < D0/V1 < 1.5$.

According to an embodiment of the invention, a light-shielding member is disposed on an incident surface or an exit surface of the reflective member and has an opening on the inside, and the light-shielding member includes a plurality of protrusions spaced apart from each other at an inner edge end; and a plurality of recessed portions spaced apart from each other at the inner edge end, the plurality of protrusions and the plurality of recessed portions intersect each other, the inner edge end includes a first area and a second area forming a first corner of the opening, and an angle formed by a line connecting the vertices of the plurality of protrusions of the first area and a line connecting the vertices of the plurality of protrusions of the second area may be an obtuse angle, and an angle formed by a line connecting the vertices of the plurality of recessed portions of the first area and a line connecting the vertices of the plurality of recessed portions of the second area may be an obtuse angle.

An electronic device according to an embodiment of the invention may include the camera module disclosed above.

[Advantageous Effects]

According to an embodiment of the invention, there is an effect of reducing the brightness of flare by blocking light traveling along an abnormal path inside a camera module. According to an embodiment of the invention, by forming a non-circular hole in a spacer or separation member between lenses, light transmitted to an image sensor may be reflected, scattered, or absorbed, thereby minimizing the occurrence of a flare phenomenon. The invention can reduce the flare area by arranging a light-blocking member on the incident or exit surface of a reflective member closest to an object.

The invention can improve the reliability of a folded camera module. Furthermore, the invention can improve the reliability of a camera module with improved reliability and an electronic device having a mobile terminal, unmanned or manned vehicle (vehicle, drone, bike, watercraft) having the same.

[Description of Drawings]

FIG. 1 is a perspective view of a camera module according to an embodiment.
FIG. 2 is a cross-sectional side view of the camera module of FIG. 1.
FIG. 3 is a diagram illustrating an optical path that generates flare in the camera module of FIG. 2.
FIG. 4 is a diagram illustrating an optical path that generates flare in the camera module of FIG. 2.
FIG. 5 is an exploded perspective view of a lens and a spacer within the movable lens group of FIGS. 2 and 3.
FIG. 6 is a plan view of the n-1th lens of FIG. 5.

FIG. 7 is a plan view of the n-th lens of FIG. 5.

FIG. 8 is a plan view comparing the sizes of the spacer of FIG. 5 and the n-th lens in a plan view.

FIG. 9 is an exploded perspective view of another example of FIG. 5, a lens and a spacer within the movable lens group.

FIG. 10 is a plan view comparing the sizes of the n-th lens and the last spacer of FIG. 9.

FIG. 11(A)(B) is drawings comparing the flare intensity incident on the image sensor according to the comparative example and the exemplary embodiment.

FIG. 12 illustrates a light-shielding member according to the first embodiment of the invention.

FIG. 13 illustrates a light-shielding member according to the second embodiment of the invention.

FIG. 14 illustrates a light-shielding member according to the third embodiment of the invention.

FIG. 15 illustrates a light-shielding member according to the fourth embodiment of the invention.

FIG. 16 is a drawing comparing the opening shape and flare shape of the light-shielding members of the comparative example (a) and the embodiments (b-e) positioned on the reflective member of the invention.

FIG. 17 is a perspective view of a mobile terminal equipped with a camera module according to the exemplary embodiment.

FIG. 18 is a perspective view of a vehicle equipped with a camera module according to the exemplary embodiment.


[Best Mode]


Hereinafter, preferred embodiments of the invention will be described in detail with reference to the accompanying drawings. The technical idea of the present invention is not limited to some of the described embodiments, but may be implemented in various different forms, and if it is within the scope of the technical idea of the present invention, one or more of its components may be selectively combined and substituted between embodiments. In addition, terms (including technical and scientific terms) used in the embodiments of the present invention, unless explicitly specifically defined and described, may be interpreted as a meaning that may be generally understood by those skilled in the art to which the present invention belongs, and terms generally used, such as terms defined in the dictionary, may be interpreted in consideration of the context of the related technology.

In addition, terms used in the embodiments of the present invention are for describing the embodiments and are not intended to limit the present invention. In the present specification, the singular form may include a plural form unless specifically described in the phrase, and may include at least one of all combinations that may be combined as A, B, and C when described as "A and/or at least one (or more than one) of B and C". Also, terms such as first, second, A, B, (a), and (b) may be used to describe components of an embodiment of the present invention. These terms are intended only to distinguish the components from other components and are not determined by their nature, sequence, or order. Also, when a component is described as being 'connected', 'coupled' or 'connected' to another component, not only when the component is directly connected, coupled or connected to another component, it may also be 'connected', 'coupled', or 'connected' due to another component between that component and the other component. In addition, when each component is described as being formed or disposed "up (above) or down (bottom)", the up (down) or down (bottom) includes not only when two components are in direct contact with each other, but also when one or more components are formed or disposed between two components. Also, when expressed as "up (above) or down (bottom)", it may include the meaning of not only the upward direction but also the downward direction based on one component.

Furthermore, the various embodiments described below may be combined with each other, unless specifically stated otherwise. Furthermore, any omission in the description of one embodiment among the various embodiments may be applied to the description of the other embodiments, unless specifically stated otherwise.

In the specification, the first lens refers to the lens closest to the object (or subject), and the last lens refers to the lens closest to the image plane (or image sensor). In this specification, the units of the lens curvature radius (Radius), thickness, TTL, ImgH (image plane height: 1/2 the diagonal length of the image plane), and focal length are all in mm. Furthermore, the lens thickness, the gap between lenses, and TTL are the distances from the optical axes of the lenses. Furthermore, in the description of the shape of the lens, a convex shape on one side means that the optical axis portion of the corresponding side is convex, and a concave shape on one side means that the optical axis portion of the corresponding side is concave. Therefore, even if one surface of a lens is described as having a convex shape, the edge portion of the lens may be concave. Similarly, even if one surface of a lens is described as having a concave shape, the edge portion of the lens may be convex.

An optical system includes an optical system comprising a plurality of lenses. For example, the optical system comprises a plurality of lenses having refractive power. The optical system may include a plurality of lenses having refractive power, a prism for refracting incident light, and a stop for controlling the amount of light. Furthermore, the optical system may include an optical filter for blocking infrared rays, and the optical filter may include an infrared blocking filter. Furthermore, the optical system may further include an image sensor for converting an image of an object incident through the optical system into an electrical signal. Furthermore, the optical system may further include a spacing member for adjusting the distance between the lenses. The plurality of lenses is formed of a material having a different refractive index than air. For example, the plurality of lenses is formed of plastic or glass. At least one of the plurality of lenses has an aspherical shape.

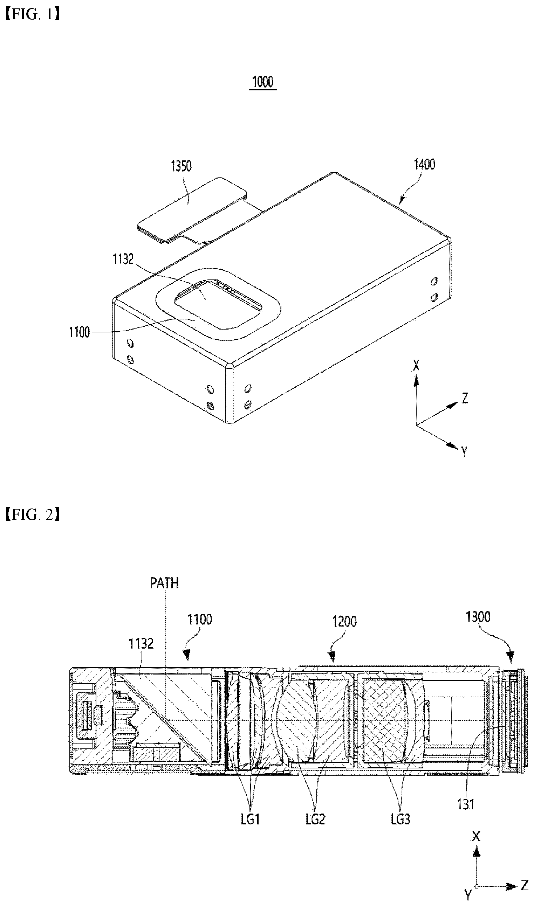

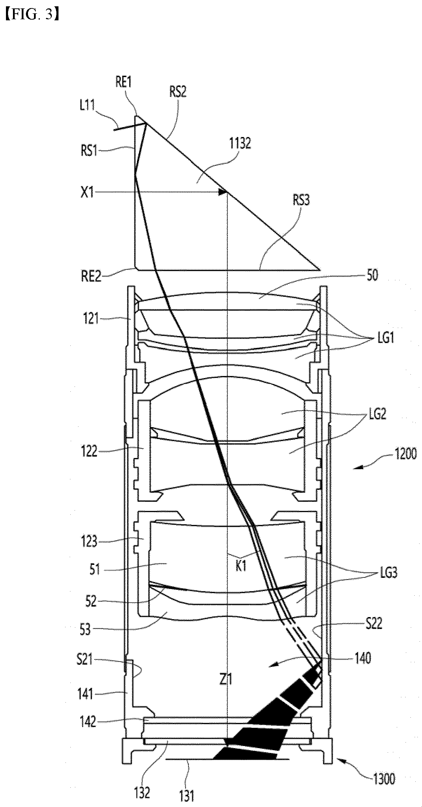

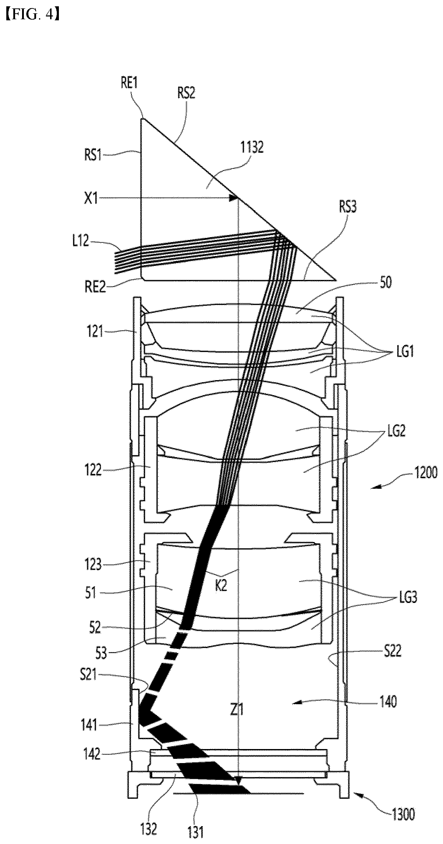

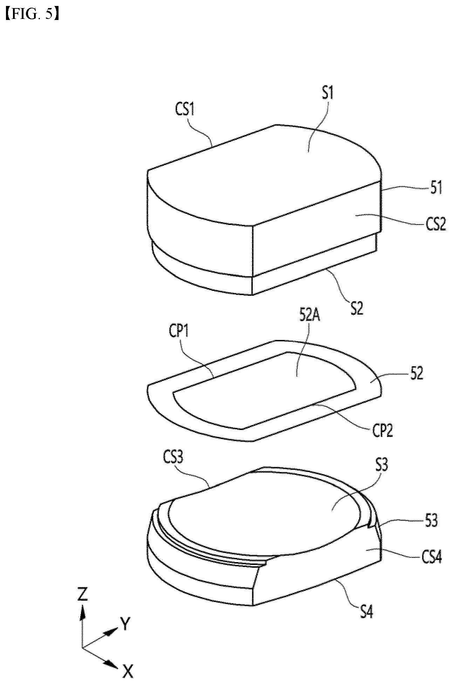

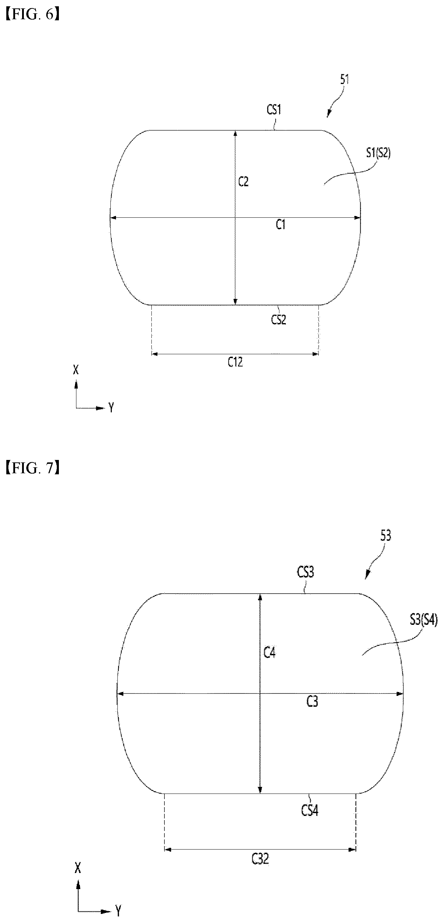

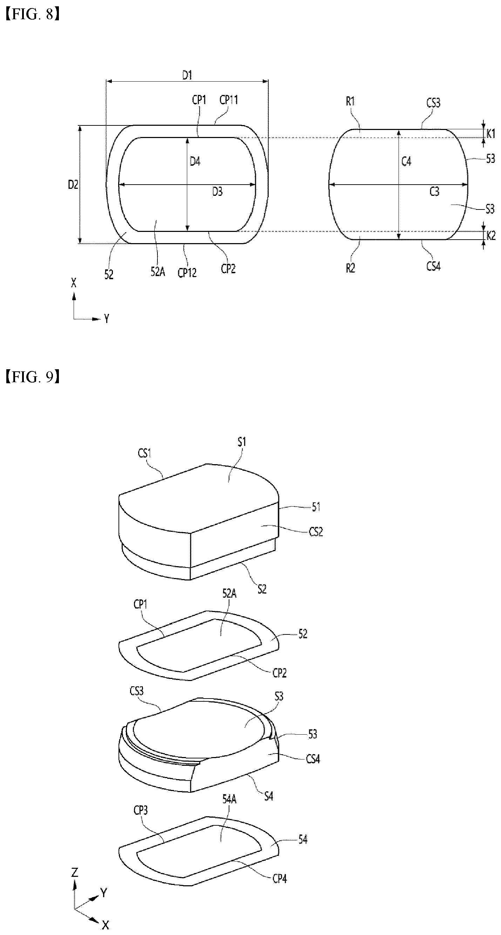

FIG. 1 is a perspective view of a camera module according to an embodiment, FIG. 2 is a side cross-sectional view of the camera module of FIG. 1, FIG. 3 is a drawing explaining an optical path that generates flare in the camera module of FIG. 2, FIG. 4 is a drawing explaining an optical path that generates flare in the camera module of FIG. 2, FIG. 5 is an exploded perspective view of a lens and a spacer in the movable lens group of FIGS. 2 and 3, FIG. 6 is a plan view of the n-1th lens of FIG. 5, FIG. 7 is a plan view of the n-th lens of FIG. 5, and FIG. 8 is a plan view comparing the sizes of the spacer and the n-th lens of FIG. 5.

Referring to FIGS. 1 to 4, a camera module 1000 according to an embodiment may include a housing 1400, a first lens assembly 1100, a second lens assembly 1200, and a sensor assembly 1300. Here, the first lens assembly 1100 may be used as a first actuator, and the second lens assembly 1200 may be used as one or more actuators. The camera module 1000 may be incorporated into electronic devices such as mobile terminals, smartphones, tablet PCs, or other mobile devices such as vehicles. The camera module may require numerous components to implement various functions, such as auto-focusing (AF), optical image stabilization (OIS), and optical zoom.

The housing 1400 may cover the first lens assembly 1100 and the second lens assembly 1200. The housing 1400 may improve the bonding strength between the first lens assembly 1100 and the second lens assembly 1200. The housing 1400 may be made of a material that blocks electromagnetic waves. The housing 1400 may be made of a metal material. Therefore, the first lens assembly 1100 and the second lens assembly 1200 within the housing 1400 may be easily protected. The housing 1400 has an object-side opening open on the upper surface. The object-side opening is a area where light is incident on the first lens assembly 1100 and may overlap with the first lens assembly 1100 in the vertical direction X. The housing 1400 has a sensor-side opening on the sensor side, and a shield can (not shown) connected to the sensor assembly 1300 may be disposed in the sensor-side opening. The housing 1400 may include a first axis X1 passing through the object-side opening and a second direction Z1 (e.g., optical axis) passing through the sensor-side opening, and the first and second axes X1 and Z1 may be orthogonal to each other.

The first lens assembly 1100 may be an Optical image stabilizer (OIS) actuator. For example, the first lens assembly 1100 may move a reflective member in a direction perpendicular to the optical axis (axis of incident light). The first lens assembly 1100 may include a fixed focal length lens arranged in a predetermined barrel (not shown). The fixed focal length lens may be defined as a single focal length lens or a single-layer lens.

The first lens assembly 1100 may change the path of light. In an embodiment, the first lens assembly 1100 may vertically change the path of light incident through an internal reflective member 1132. The reflective member 1132 may be, for example, a prism or a mirror. For example, the reflective member 1132 can change light from a first direction X to a second direction (Z). Alternatively, the reflective member 1132 can change light from a first axis X1 to a second axis Z1. With this configuration, even if the thickness of the mobile terminal or electronic device in the first direction X decreases, a lens configuration larger than the thickness of the mobile terminal may be placed within the mobile terminal through the change in the optical path, thereby performing magnification, auto-focusing (AF), zoom, and optical image stabilization (OIS) functions. However, the present invention is not limited thereto, and the first lens assembly 1100 can move the optical path in multiple directions in the vertical direction or tilt at a predetermined angle. The first lens assembly 1100 may include a driving member that rotates, moves, or tilts the reflective member 1132, but is not limited thereto.

The first lens assembly 1100 can perform an OIS function. The second lens assembly 1200 can perform a zooming function and an auto-focusing (AF) function. The configuration of the driving unit of the second lens assembly 1200 will be omitted. The second lens assembly 1200 may be positioned on the sensor side of the first lens assembly 1100. Here, the rear end of the first lens assembly 1100 is an area adjacent to the image sensor 1303. The second lens assembly 1200 may be positioned between the first lens assembly 1100 and the image sensor 131.

The second lens assembly 1200 may be a zoom actuator or an auto-focusing (AF) actuator. For example, the second lens assembly 1200 may include multiple lens groups LG1, LG2 and LG3 and may perform an auto-focusing or zoom function by moving at least one lens group in response to a control signal from a predetermined control unit. Each of the plurality of lens groups LG1, LG2 and LG3 may include at least one lens.

The plurality of lens groups LG1, LG2 and LG3 may include a first lens group LG1, a second lens group LG2, and a third lens group LG3 aligned along the optical axis toward the sensor from the object side. The first lens group LG1 includes at least one lens and a first carrier 121 and may be positioned between the reflective member 1132 and the second lens group LG2. One or more lenses may be combined within the first carrier 121.

The first lens group LG1 may be defined as a fixed lens group whose lenses do not move in the optical axis direction. The first lens 50 closest to the reflective member 1132 in the first lens group LG1 may include a convex object-side surface or a concave object-side surface. The object-side surface of the first lens 50 may have the largest effective length among the lenses of the first to third lens groups LG1, LG2 and LG3. Here, the first lens 50 may have different effective lengths in the first direction X and the third direction Y. For example, the effective length of the first lens 50 in the third direction Y may be greater than the effective length in the first direction X. That is, the first lens 50 may have different lengths in the first and third axes X and Y directions that are orthogonal to each other, and may reduce the height of the camera module 1000 in the first direction X. Here, the effective length of each lens is the average of the effective lengths of the object-side surface and the sensor-side surface. As another example, when there are multiple lenses in the first lens group LG1, the effective lengths of the multiple lenses in the third direction Y may be greater than the effective lengths in the first direction X. That is, at least the lenses of the first lens group LG1 may be provided in a D-cut shape having flat or cut surfaces on both sides in the first direction X.

The second lens group LG2 may be disposed between the first lens group LG1 and the second lens group LG2 and may include at least one lens and a second carrier 122. The lenses of the second lens group LG2 may be coupled within the second carrier 122 and may move along the optical axis Z1 together with the second carrier 122. A driving member (not shown) may be coupled to the periphery of the second lens group LG2 to move the second carrier 122 along the optical axis, but this is not limited thereto. At least the lenses of the second lens group LG2 may have an effective length in the third direction Y that is greater than an effective length in the first direction X. At least a lens of the second lens group LG2 may be provided in a D-cut shape having a flat or cut surface on both sides in the first direction X.

The third lens group LG3 is arranged between the second lens group LG2 and the image sensor 131, and may include at least one lens and a third carrier 123. The lenses of the third lens group LG3 may be coupled within the third carrier 123 and may move along the optical axis Z1 together with the third carrier 123. A driving member (not shown) may be coupled to the periphery of the third lens group LG3 to move the third carrier 123 along the optical axis, but is not limited thereto. Here, among the lenses of the third lens group LG3, the n-th lens closest to the image sensor 131 is defined as the third lens 53, and the n-1th lens is defined as the second lens 51.

At least one lens of the third lens group LG3 may have an effective length in the third direction Y greater than its effective length in the first direction X. At least one lens of the third lens group LG3 may be provided in a D-cut shape with flat or cut surfaces on both sides in the first direction X.

The lens barrel 141 may have a portion of the first carrier 121 coupled to the object side, and the second and third carriers 122 and 123 coupled therein. The lower end of the first carrier 121, the upper or lower end of the second carrier 122, and the upper or lower end of the third carrier 123 may include a light-shielding protrusion extending around the object-side surface or the sensor-side surface of the lens.

A spacer or a separating member may be included in the periphery between two adjacent lenses to reflect, absorb, or scatter light traveling along an unnecessary optical path. The spacer may be defined as a relatively thick spacer. The material of the spacer may be a material that absorbs light, and may include a polyethylene film (PE film) or a polyester (PET) film. As another example, the spacer may be a metal or an alloy and an oxide film may be formed on the surface thereof. The material included in the metal or alloy may include at least one of In, Ga, Zn, Sn, Al, Ca, Sr, Ba, W, U, Ni, Cu, Hg, Pb, Bi, Si, Ta, H, Fe, Co, Cr, Mn, Be, B, Mg, Nb, Mo, Cd, Sn, Zr, Sc, Ti, V, Eu, Gd, Er, Lu, Yb, Ru, Y, and La. The oxide film may be an oxide material processed with black oxide or brown oxide using copper. The material of the first to third carriers 121, 122, and 123 may be a light-absorbing material, such as a polyethylene (PE) film, a polyester (PET) film, or a material selected from the spacer material.

The image sensor 131 can detect light and convert it into an electrical signal. The image sensor 131 can detect light passing through the lenses. The image sensor 131 may include a device capable of detecting incident light, such as a charge-coupled device (CCD) or a complementary metal oxide semiconductor (CMOS). An optical filter 142 may be positioned between the third lens group LG3 and the image sensor 131. The optical filter 142 may be coupled to the lower portion of the lens barrel 141. The optical filter 142 may be disposed between the lens closest to the sensor side among the lenses and the image sensor 131. The optical filter 142 may include an infrared filter or an infrared cut-off filter (IR cut-off). The optical filter 142 may pass light of a set wavelength band and filter light of a different wavelength band. When the optical filter 142 includes an infrared filter, it may block radiant heat emitted from external light from being transmitted to the image sensor 131. In addition, the optical filter 142 may transmit visible light and reflect infrared light.

The image sensor 131 may detect light passing through the optical filter 142 or the last lens and convert it into an electrical signal. The image sensor 131 may detect light passing through the lenses sequentially. The image sensor 131 may include a cover glass 132 to protect the image sensor 131 disposed on the circuit board. The cover glass 132 may be disposed between the optical filter 142 and the image sensor 131.

The center distance between the first lens group LG1 and the third lens group LG3 may vary depending on the movement of the second lens group LG2 along the optical axis. The optical distance between the second lens group LG2 and the image sensor 131 may vary depending on the movement of the third lens group LG3 along the optical axis. The optical distance between the second lens group LG2 and the image sensor 131 is the back focal length (BFL), and the BFL is the optical distance between the sensor-side surface of the n-th lens 53 closest to the image sensor 131 among the lenses and the image sensor 131. The BFL may satisfy the following conditions:

$$\text{Condition: } 2\,\text{mm} < BFL < 10\,\text{mm}$$

Preferably, 2.2 mm < BFL < 8.5 mm may be satisfied.

The second and third lens groups LG2 and LG3 are disposed between the first lens group LG1 and the image sensor 131 and may be operated in a middle mode (normal mode), a wide mode, or a tele mode depending on the effective focal length (EFL). The effective focal length of the middle mode may be greater than the effective focal length of the wide mode and less than the effective focal length of the tele mode. The effective focal length may satisfy the following conditions:

$$\text{Condition: } 7 \text{ mm} < EFL < 35 \text{ mm}$$

Preferably, 8 mm < EFL < 25 mm may be satisfied.

The maximum optical axis distance between the first lens 50 and the third lens 53 may vary depending on the operating mode. The maximum optical axis distance between the first lens 50 and the third lens 53 is the optical axis distance from the center of the object-side surface of the first lens 50 to the center of the sensor-side surface of the third lens 53.

As shown in FIG. 3, since the optical axis distance between the second lens group LG2 and the image sensor 131 is provided to be greater than 2 mm, a first inner surface S21 and a second inner surface S22 of the lens barrel 121, located around the sensor-side area between the second lens group LG2 and the image sensor 131, may be exposed to an abnormal light path. The first inner surface S21 and the second inner surface S22 may face each other in the first direction X. To explain in detail, the reflective member 1132 includes an incident surface RS1, a reflective surface RS2, and an exit surface RS3. The incident surface RS1 is a surface adjacent to an object, and the reflective surface RS2 is an inclined surface disposed between the incident surface RS1 and the exit surface RS3 and reflects light incident on the incident surface RS1, and the exit surface RS3 emits light reflected by the reflective surface RS2.

The first light L11 incident on an area adjacent to the first edge RE1 of the incident surface RS1 is reflected by the reflective surface RS1, re-reflected by the incident surface RS2, and then emitted through the exit surface RS3. At this time, the first light L11 emitted through the reflective member 1132 is refracted and travels through a plurality of lenses, and is reflected on the second inner surface S22 of the sensor-side area 140 of the lens barrel 141 and then travels to the image sensor 131. The first light reflected by the second inner surface S22 travels along an abnormal path, which may cause an increase in the brightness of the flare on the image sensor 131.

The second light L12 incident on the area adjacent to the second edge RE2 of the incident surface RS1 of the reflective member 1132 is reflected by the reflective surface RS2 and then emitted through the exit surface RS3. At this time, the second light L12 emitted through the reflective member 1132 is refracted and travels through a plurality of lenses, and can travel to the image sensor 131 after being reflected on the first inner surface S21 of the sensor-side area 140 of the lens barrel 141. The second light L12 reflected by the first inner surface S21 may travel along an abnormal path, which may cause an increase in the brightness of the flare on the image sensor 131. That is, the light L11 and L12 incident on the area adjacent to the first and second edges RE1 and RE2 of the incident surface RS1 of the reflective member 1132 may pass through multiple lenses and be reflected by the inner surface S21 and S22 of the sensor-side area 140 of the lens barrel 141, thereby causing a problem of increasing the flare intensity on the image sensor 131.

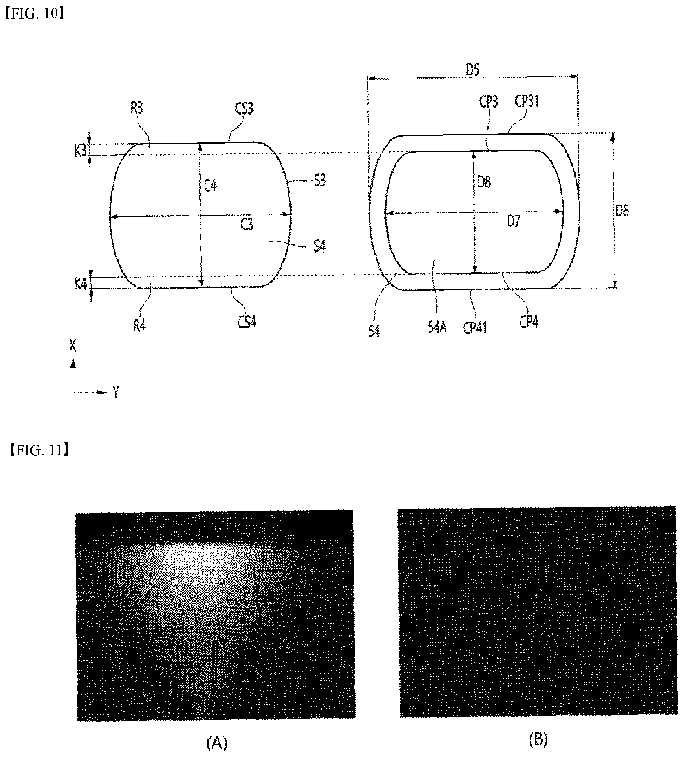

The first light L11 passing through the incident surface RS1 of the reflective member 1132 and the second inner surface S22 of the lens barrel 141 may travel at a first angle K1 of 10 degrees or more, for example, in the range of 10 to 30 degrees, relative to the optical axis Z1 when passing through the optical axis Z1. The second light L12 passing through the reflective surface RS2 of the reflective member 1132 and the first inner surface S21 of the lens barrel 141 may travel at a second angle K2 of 10 degrees or more, for example, in the range of 10 to 30 degrees, with respect to the optical axis Z1 when passing through the optical axis Z1. The invention provides a concave-convex pattern in the areas of the first and second inner surfaces S21 and S22 of the lens barrel 141, i.e., areas where the first and second lights L11 and L12 are incident, so as to reflect or scatter the light. Accordingly, the brightness of the flare formed on the image sensor 131 may be reduced. FIG. 11(A) shows the brightness of a comparative example flare when the light along the path is not blocked by the uneven pattern, and FIG. 11(B) shows an example where the brightness of the flare is eliminated when the light along the path is blocked by the uneven pattern.

An embodiment of the invention includes arranging a first spacer 52 around the object-side or sensor-side surface of the lens of the third lens group LG3, and the first spacer 52 may have a hole size or shape that blocks light L11 and L12 traveling at the first angle K1 and the second angle K2. Accordingly, the first spacer 52 can reflect, scatter, and absorb the lights L11 and L12 that are reflected by the reflective member 1132 and then travel toward the first and second inner surfaces S21 and S22 of the lens barrel 141, thereby removing the flare on the image sensor 131. FIG. 11(A) shows the brightness of the flare of a comparative example when the first spacer 52 does not block the light of the path, and FIG. 11(B) shows an example in which the brightness of the flare is removed when the light of the path is blocked by the first spacer 52.

Referring to FIGS. 5 to 8, the second lens 51 has short-axis sides CS1 and CS2 on both sides of the first direction X, and the short-axis sides CS1 and CS2 may be disposed in a direction orthogonal to the long-axis sides. The short-axis side surfaces CS1 and CS2 may be flat or have sides having a length smaller than the lens radius, and the long-axis side surfaces may be provided as curved surfaces having a lens radius. That is, the second lens 51 may be a D-cut lens having a shape in which both short-axis sides CS1 and CS2 are cut.

As shown in FIG. 6, when the maximum effective length of the object-side surface S1 or the sensor-side surface S2 of the second lens 51 is C1 and the minimum effective length is C2, the condition of the Mathematical formula may satisfy: 0.55 < C2 / C1 < 0.98. Here, when the value of the formula is less than 0.55, it is difficult to manufacture the object-side surface S1 or the sensor-side surface S2 of the second lens 51 into a non-circular shape, and it is difficult to control the distribution of the incident light, and when it is greater than 0.98, the size reduction in the first direction X of the optical system may be minimal. The Mathematical formula may be applied to the sensor-side surface S1 and the object-side surface S2 of the second lens 51. Here, the length CS12 of the short-axis side surfaces CS1 and CS2 may be 60% or more, for example, in the range of 60% to 90%, of the long-axis length C1. The third lens 53 has short-axis side surfaces CS3 and CS4 on both sides of the first direction X, and the short-axis side surfaces CS3 and CS4 may be arranged in a direction orthogonal to the long-axis side surfaces. The short-axis side surfaces CS3 and CS4 may be flat or have sides having a length smaller than the lens radius, and the long-axis side surfaces may be provided as curved surfaces having the lens radius. In other words, the third lens 53 may be a D-cut lens having short-axis side surfaces CS3 and CS4 cut into a shape.

As shown in FIG. 7, when the maximum effective length of the object-side surface S3 or the sensor-side surface S4 of the third lens 53 is C3 and the minimum effective length is C4, the condition of the Mathematical formula may satisfy: 0.55 < C4 / C3 < 0.98. Here, when the value of the formula is less than 0.55, it is difficult to manufacture the object-side surface S3 or the sensor-side surface S4 of the third lens 53 into a non-circular shape and it is difficult to control the distribution of the incident light, and when it is greater than 0.98, the size reduction in the first direction X of the optical system may be minimal. The Mathematical formula may be applied to the sensor-side surface S3 and the object-side surface S4 of the third lens 53. Here, the length CS32 of the short-axis side surfaces CS3 and CS4 may be 60% or more, for example, in the range of 60% to 90%, of the long-axis length C3.

Here, the maximum effective length of the third lens 53 can satisfy the following formula compared to the first lens 50.

$$\text{Mathematical formula: } 0.55 < CA32 / CA11 < 0.9.$$

CA11 is the maximum effective length of the object-side surface of the first lens 50, and CA32 is the maximum effective length of the sensor-side surface of the third lens 53. Preferably, 0.57 < CA32 / CA11 < 0.9 or 0.6 < CA32 / CA11 < 0.9 may be satisfied. If it is less than the above conditions, the characteristics of RI (Relative illumination) and MTF (Modulation transfer function) may deteriorate.

The first spacer 52 has a hole 52A, and the hole 52A has short-axis surfaces CP1 and CP2 on both sides of the first direction X, and the short-axis surfaces CP1 and CP2 may be disposed in a direction orthogonal to a plane of the major axis (e.g., Y-axis direction). The short-axis surfaces CP1 and CP2 may be flat or have side surfaces having a length smaller than the hole radius, and the major-axis surfaces may be provided as curved surfaces having the hole radius. That is, the first spacer 52 may have a D-cut hole shape in which both short-axis surfaces CP1 and CP2 are cut.

When the hole 52A of the first spacer 52 has a maximum length D3 and a minimum length D4, the condition of the Mathematical formula may satisfy: 0.55 < D4 / D3 < 0.98. Here, D3 may be equal to or different from C3, and the condition may satisfy: D4 < C4. The shape of the hole 52A of the first spacer 52 may be a non-circular shape or a D-cut shape having a long and short axis length. The outer shape of the first spacer 52 may have a length D2 in the first direction X that is different from the length D2 in the third direction Y. That is, the condition may satisfy: D2 < D1. The outer shape of the first spacer 52 may be a non-circular shape or a D-cut shape having long and short axis sides CP11 and CP12.

When the outer shape of the first spacer 52 has a maximum length of D1 and a minimum length of D2, the condition of the Mathematical formula may satisfy: 0.55 < D2 / D1 < 0.98. Here, D1 is greater than C3, and the conditions may satisfy: C3 < D1 and C4 < D2.

When the object-side surface S3 of the third lens 53 and the first spacer 52 overlap in the optical axis direction, the overlapping area R1 and R2 of the object-side surface S3 of the third lens 53 may cover both edge portions of the effective area of the object-side surface S3 in the first axis X direction. The first spacer 52 may reflect, absorb, and scatter the first and second lights L11 and L12 traveling in an abnormal path as shown in FIGS. 3 and 4, thereby reducing the flare intensity on the image sensor 131 or eliminating the flare.

The widths K1 and K2 of the overlapping areas R1 and R2 of the object-side surface S3 of the third lens 53 may each be 10% or less of the short-axis length C4, for example, in the range of 0.5% to 10% or 0.5% to 5%. When the widths K1 and K2 of the overlapping areas R1 and R2 are within the above range, light along the abnormal path may be blocked. When they exceed the above range, flare intensity may increase or optical characteristics may deteriorate.

As in other examples of FIGS. 9 and 10, a first spacer 52 around the perimeter between the second lens 51 and the third lens 53, and a second spacer 54 around the perimeter of the sensor-side surface S4 of the third lens 53 may include. The first spacer 52 may refer to the description disclosed above, and as another example, the hole 52A therein may have a circular shape. The second spacer 54 has a hole 54A, and the hole 54A has short-axis sides CP3 annd CP4 on both sides of the first direction X, and the short-axis sides CP3 and CP4 may be arranged in a direction perpendicular to the plane of the major axis (e.g., Y-axis direction). The short-axis sides CP3 and CP4 may be flat or have side surfaces having a length smaller than the hole radius, and the major-axis sides may be provided as curved surfaces having the hole radius. That is, the second spacer 54 may have a D-cut hole shape in which both short-axis sides CP3 and CP4 are cut.

When the hole 54A of the second spacer 54 has a maximum length of D7 and a minimum length of D8, it may satisfy the condition of the formula: $0.55 < D8 / D7 < 0.98$. Here, D7 may be the same as or different from C3, and can satisfy the condition of $D8 < C4$. The shape of the hole 54A of the second spacer 54 may be a non-circular shape or a D-cut shape having long and short axis lengths. The outer shape of the second spacer 54 may have a length D6 in the first direction X that is different from the length D5 in the third direction Y. That is, the condition may satisfy: $D6 < D5$. The outer shape of the second spacer 54 may be a non-circular shape or a D-cut shape having long and short axis sides CP31 and CP32. The outer shape of the second spacer 54 may satisfy the condition of $0.55 < D6 / D5 < 0.98$, assuming that the maximum length is D5 and the minimum length is D6. Here, D5 is greater than C3, and the conditions may satisfy: $C3 < D5$ and $C4 < D6$.

When the sensor-side surface S4 of the third lens 53 and the second spacer 54 overlap in the optical axis direction, the overlapping area R1 and R2 of the sensor-side surface S4 of the third lens 53 may cover both edge portions of the effective area of the sensor-side surface S4 in the first axis X direction. The second spacer 54 may reflect, absorb, and scatter the first and second lights L11 and L12 that proceed in an abnormal path as shown in FIGS. 3 and 4, thereby reducing the flare brightness on the image sensor 131 or eliminating the flare. Each of the widths K3 and K4 of the overlapping areas R3 and R4 of the sensor-side surface S4 of the third lens 53 may be 10% or less of the minor axis length C4, for example, in the range of 0.5% to 10% or 0.5% to 5%. When the widths K3 and K4 of the overlapping areas R3 and R4 of the sensor-side surface S4 are within the above range, the light of the abnormal path may be blocked, and when they are outside the above range, the flare brightness may increase or the optical characteristics may deteriorate. The second spacer 54 may reflect, absorb, and scatter the first and second lights L11 and L12 that travel in an abnormal path as shown in FIGS. 3 and 4, thereby reducing the flare intensity on the image sensor 131 or eliminating the flare.

The effective lengths of the object-side and sensor-side surfaces of the first, second, and third lenses 50, 51, and 53 in the first axial direction may be different from each other, and the effective lengths of the object-side and sensor-side surfaces in the third axial direction may be different from each other. As another example, a third spacer (not shown) having a non-circular hole around the object-side surface S1 of the second lens 51 may be further included, and the third spacer may include the configuration of the holes 52A and 54A of the first and second spacers 52 and 54 as described above. Accordingly, by providing a non-circular hole shape of at least one spacer among the perimeter of the object-side surface S1 of the second lens 51, the perimeter of the sensor-side surface S2, and the perimeter of the sensor-side surface S4 of the third lens 52, the light traveling along an abnormal path may be blocked.

In an embodiment of the invention, when the hole shape of at least one of the first to third spacers is non-circular, the length of the hole in the short axis direction is D0, and the length of the image sensor in the first direction is V1, the Mathematical formula may satisfy: $0.6 < D0/V1 < 1.5$. If the Mathematical formula is greater than the above range, the flare improvement effect is minimal, and if it is less than the above range, the peripheral light ratio (RI) of the image sensor 131 may become excessively small. Here, the vertical length of the image sensor 131 may be $3.02\,\text{mm} \pm 0.5\,\text{mm}$. For example, a spacer having a non-circular hole may be arranged around the object-side or sensor-side surface of the n-th lens. In this case, the distance between the inner surface of the lens barrel and the spacer may be reduced, thereby facilitating adjustment of the shortened length of the hole and controlling the amount of light incident on the image sensor 131.

As described above, the camera module 1000 includes a reflective member 1132 adjacent to an object, and in an optical system having at least one fixed lens group, at least one movable lens group, and a BFL of greater than 2 mm, if the effective area of the n-th and n-1th lenses is non-circular, a spacer having a non-circular hole may be arranged around the object-side or sensor-side surface of the non-circular lens to block light that is focused on the image sensor 131 through an abnormal path. Accordingly, flare on the image sensor 131 may be eliminated or its intensity reduced, and the optical characteristics of the camera module may be improved.

FIG. 11(A) is a drawing measuring flare intensity by a camera module having a spacer with a circular hole. The embodiment of FIG. 11(B) shows that, when at least one spacer has a non-circular hole and is positioned around the n-th and n-1th lenses, the flare intensity is significantly reduced or nearly eliminated compared to the comparative example (FIG. 11(A)).

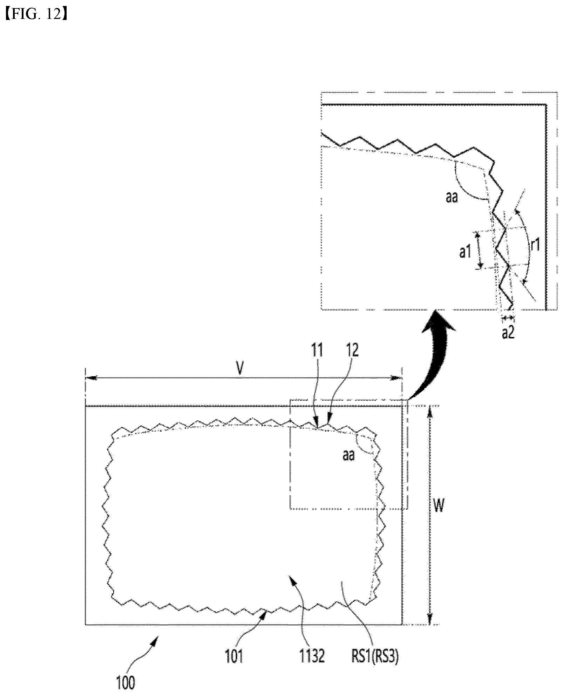

FIGS. 12 to 15 are drawings illustrating examples of the opening shapes of a light-shielding member positioned on the incident surface RS1 or the reflective surface RS2 of a reflective member according to embodiments of the invention.

As shown in FIG. 12, the light-shielding member 100 may be disposed on the incident surface RS1 of the reflective member 1132. As another example, the light-shielding member 100 may be disposed on the exit surface RS3 of the reflective member 1132. As another example, the light-shielding member 100 may be disposed on the reflective surface RS2 of the reflective member 1132. The opening 101 of the light-shielding member 100 may be a transparent area and may correspond to the effective area of the reflective member 1132, and the light-shielding member 100 may be attached on an ineffective area of the incident surface RS1 or the exit surface RS3 of the reflective member 1132. As another example, the light-shielding member 100 may be disposed around the periphery of the reflective surface RS2 of the reflective member 1132.

The light-shielding member 100 has a ring shape or a frame shape having an opening 101 on the inside, and the shape of the opening 101 may be a circle, an oval shape, or a polygonal shape. The light-shielding member 100 comprises a material that blocks incident or reflected light, and may be the material of the spacer disclosed above.

The light-shielding member 100 may include an outer edge and an inner edge. In the reflective member 1132, the edge of the incident surface RS1 may be adjacent to the reflective surface RS2, and the edge of the exit surface RS3 may be adjacent to the reflective surface RS2. Therefore, a flare phenomenon may occur due to light passing through the edge of the incident surface RS1 or the exit surface RS3. The light-shielding member 100 may be disposed at the edges of the incident surface and the exit surface, thereby blocking light that causes the flare phenomenon.

The light-shielding member 100 may be formed by coating or silk-screen printing on at least one of the incident surface RS1 and the exit surface of the reflective member 1132. As another example, the light-shielding member 100 may be formed with black painting around the effective area of the reflective member 1132. For example, the light-shielding member 100 may include a material having low light reflectivity. Alternatively, the light-shielding member 100 may include a material having high light absorption. The shape of the light-shielding member 100 may vary depending on the shapes of the incident surface RS1 and the exit surface RS3 of the reflective member 1132. The outer edge shape of the light-shielding member 100 may have a rectangular shape. The length of the light-shielding member 100 in the first axis direction may be V, and the length in the second axis direction may be W. V may be 7.5 ± 0.04 mm, and W may be 6.2 ± 0.04 mm. The ratio of V to W may satisfy 1 to 1.5. The ratio of V and W may vary depending on the ratio of the effective area of the reflective member 1132 on which the light-shielding member 100 is arranged.

If the cross-section of the inner edge end of the light-shielding member 100 is constant, light may be reflected from the inner edge end, causing a flare phenomenon. Therefore, various patterns may be formed on the inner edge end of the light-shielding member 100. Through this, even if light is reflected from the inner edge end of the light-shielding member 100, the light may be scattered in various directions, thereby minimizing the flare phenomenon. The light-shielding member 100 may include a plurality of protrusions spaced apart from each other at the inner edge end and a plurality of recessed portions spaced apart from each other at the inner edge end. The plurality of protrusions may have any one of an arc shape, a triangle shape, a square shape, and a trapezoidal shape. The plurality of recessed portions may have any one of an arc shape, a triangle shape, a square shape, and a trapezoidal shape.

The plurality of protrusions and the plurality of recessed portions arranged along the inner edge of the light-shielding member 100 may be formed in an intersection. When the protrusions and recessed portions are formed in an intersection, they may each have the same shape. When the protrusions and recessed portions are formed in an intersection, they may each have different shapes. For example, the protrusions and the recessed portions may each have a triangular shape, but with different angles between them. The protrusions and the recessed portions may each have an arc shape, but with different radii of curvature.

The inner edge end of the light-shielding member 100 may include a first area and a second area forming a first corner of the opening. The inner edge end of the light-shielding member 100 may include a third area opposite the first area, and a fourth area opposite the second area. The inner edge end of the light-shielding member 100 may include a second corner formed by the first area and the fourth area, a third corner formed by the second area and the third area, and a fourth corner formed by the third area and the fourth area. A line connecting the vertices of a plurality of protrusions of at least one area among the first to fourth areas may form a curve. The curve connecting the vertices of the plurality of protrusions of each area may be formed convexly in the direction of the outer edge. The curve connecting the vertices of the plurality of protrusions of each area may be formed concavely in the direction of the inner edge. The lines connecting the vertices of the plurality of protrusions in the first to fourth areas may be formed symmetrically with respect to the center of each area.

At the inner edge end of the light-shielding member 100, the angle formed by the line connecting the vertices of the plurality of protrusions in the first area and the line connecting the vertices of the plurality of protrusions in the second area may be an obtuse angle. The angle formed by the line connecting the vertices of the plurality of recessed portions in the first area and the line connecting the vertices of the plurality of recessed portions in the second area may be an obtuse angle. The angle formed by the line connecting the vertices of the plurality of protrusions in the second area and the line connecting the vertices of the plurality of recessed portions in the third area may be an obtuse angle. The angle formed by the line connecting the vertices of the plurality of recessed portions in the second area and the line connecting the vertices of the plurality of recessed portions in the third area may be an obtuse angle. The angle formed by the line connecting the vertices of the plurality of protrusions in the third area and the line connecting the vertices of the plurality of protrusions in the fourth area may be an obtuse angle. The angle formed by the line connecting the vertices of the plurality of recessed portions in the third area and the line connecting the vertices of the plurality of recessed portions in the fourth area may be an obtuse angle. The angle formed by the line connecting the vertices of the plurality of protrusions in the fourth area and the line connecting the vertices of the plurality of protrusions in the first area may be an obtuse angle. The angle formed by the line connecting the vertices of the plurality of recessed portions in the fourth area and the line connecting the vertices of the plurality of recessed portions in the first area may be an obtuse angle.

The ratio of the number of protrusions formed in the first area of the light-shielding member 100 to the number of protrusions formed in the second area may be 1.4:1 to 1.7:1. The ratio of the number of protrusions formed in the first area to the number of protrusions formed in the second area of the light-shielding member 100 may be 1.4 to 1.7. The ratio of the number of recessed portions formed in the first area of the light-shielding member 100 to the number of recessed portions formed in the second area may be 1.4:1 to 1.7:1. The ratio of the number of recessed portions formed in the first area to the number of recessed portions formed in the second area of the light-shielding member 100 may be 1.4 to 1.7.

The ratio of the number of protrusions or recessed portions formed in the first area of the light-shielding member 100 to the number of protrusions or recessed portions formed in the second area may vary depending on the ratio of the length of the light-shielding member 100 in the first axis direction to the length of the light-shielding member 100 in the second axis direction. As the length of the light-shielding member 100 in the first axis direction increases, the number of protrusions or recessed portions in the first area may increase. As the length of the light-shielding member 100 in the second axis direction increases, the number of protrusions or recessed portions in the second area may increase. The plurality of protrusions may include a first portion and a second portion, which are adjacent protrusions. The distance between the first portion and the second portion may be 0.5 mm to 1.1 mm. If the distance is less than the lower limit, manufacturability may be reduced, and if it exceeds the upper limit, optical performance, such as a high F-number, may be degraded.

Referring to FIG. 12, each of the plurality of protrusions 11 of the light-shielding member 100 may be formed in a triangular shape. Each of the plurality of recessed portions 12 of the light-shielding member 100 may also be formed in a triangular shape. The plurality of protrusions 11 may protrude from the outside of the light-shielding member 100 toward the opening 101 or toward the inside. The plurality of recessed portions 12 may be concave toward the outside of the light-shielding member 100 or around the opening 101.

The angle (aa) formed by the line connecting the vertices of the plurality of protrusions 11 of the first area of the light-shielding member 100 and the line connecting the vertices of the plurality of protrusions 11 of the second area may be an obtuse angle. The distance between the vertices of two adjacent protrusions 11 among the plurality of protrusions 11 may be 0.5 mm to 1.1 mm. The distance a1 between the vertices of two adjacent recessed portions 12 among the plurality of recessed portions 12 may be 0.5 mm to 1.1 mm. Any one of the plurality of protrusions 11 may be formed to have a height a2 based on the line connecting the adjacent recessed portions 12. a2 may be 0.15 mm to 0.2 mm. The angle between any one of the plurality of triangular protrusions 11 may be formed to have an angle r1. r1 may satisfy 115 degrees to 125 degrees.

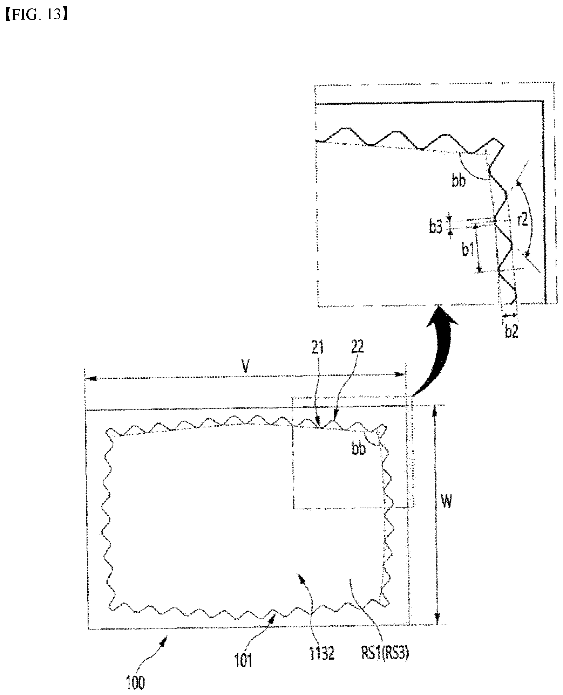

Referring to FIG. 13, each of the plurality of protrusions 21 arranged on the inside of the light-shielding member 100 may be formed in a trapezoidal shape. Each of the plurality of recessed portions 22 arranged on the inside of the light-shielding member 100 may be formed in a trapezoidal shape. An angle (bb) formed by a line connecting the vertices of the plurality of protrusions 21 of the first area of the light-shielding member 100 and a line connecting the vertices of the plurality of protrusions 21 of the second area may be an obtuse angle. A distance b1 between the vertices of two adjacent protrusions 21 among the plurality of protrusions 21 may be 0.5 mm to 1.1 mm. A distance between the vertices of two adjacent recessed portions 22 among the plurality of recessed portions 22 may be 0.5 mm to 1.1 mm. Any one of the plurality of protrusions 21 may be formed to have a height b2 relative to a line connecting adjacent recessed portions 22. b2 may be 0.15 mm to 0.2 mm. The length b3 of the most inwardly protruding side of any one of the plurality of trapezoidal protrusions 21 may be 0.05 mm to 0.15 mm. The angle formed by the two sides of any one of the plurality of trapezoidal protrusions 21 may be formed to have an angle r2. r2 may be 95 to 105 degrees.

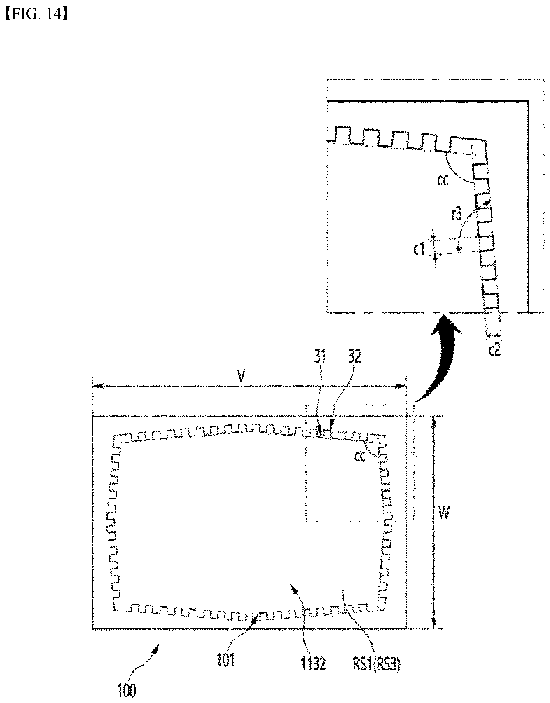

Referring to FIG. 14, each of the plurality of protrusions 31 arranged on the inner side of the light-shielding member 100 may be formed in a rectangular shape. Each of the plurality of recessed portions 32 arranged on the inner side of the light-shielding member 100 may be formed in a rectangular shape. The angle (cc) formed by the line connecting the vertices of the plurality of protrusions 31 of the first area of the light-shielding member 100 and the line connecting the vertices of the plurality of protrusions 31 of the second area may be an obtuse angle. The distance C1 between the vertices of two adjacent protrusions 31 among the plurality of protrusions 31 may be 0.5 mm to 1.1 mm. The distance between the vertices of two adjacent recessed portions 32 among the plurality of recessed portions 32 may be 0.5 mm to 1.1 mm. Any one of the plurality of protrusions 31 may be formed to have a height of c2 based on the line connecting adjacent recessed portions 32. C2 may be 0.15 mm to 0.2 mm. The angle formed by the line connecting the plurality of recessed portions 32 and the protrusion 31 may be formed to have an angle of r3. r3 may satisfy 85 to 95 degrees, and may satisfy 90 degrees.

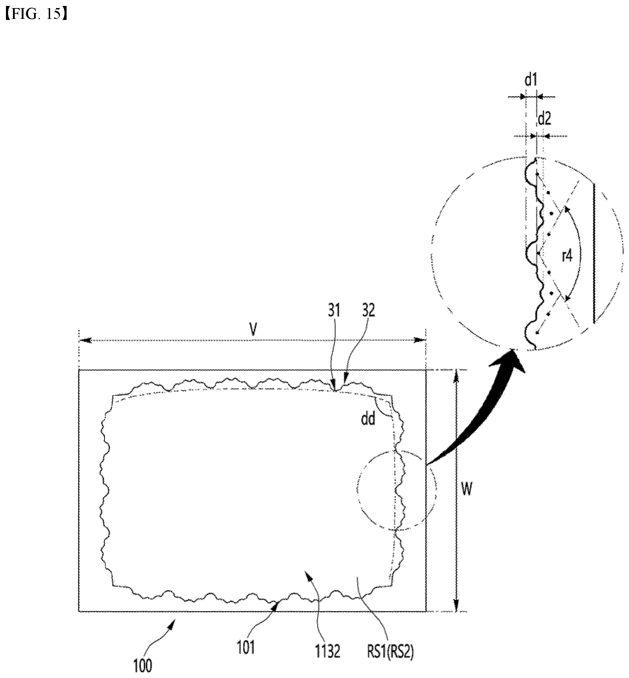

Referring to FIG. 15, each of the plurality of protrusions 41 arranged on the inner side of the light-shielding member 100 may be formed in an arc shape. An angle (dd) formed by a line connecting the vertices of the plurality of protrusions 41 of the first area of the light-shielding member 100 and a line connecting the vertices of the plurality of protrusions 41 of the second area may be an obtuse angle. The plurality of protrusions 41 may include a first protrusion and a second protrusion that protrude the most inwardly from the inner edge end. The plurality of protrusions 41 may include a first protrusion and a second protrusion that protrude the most inwardly among adjacent protrusions, respectively. The first protrusion and the second protrusion may be formed to be spaced apart from each other. A plurality of convex portions 42 having a smaller radius of curvature than the radii of curvature of the first protrusion and the second protrusion may be included between the first protrusion and the second protrusion. A plurality of convex portions 42 having a radius of curvature larger than the radius of curvature of the first and second protrusions may be included between the first and second protrusions. Here, the convex portions are simply named differently to distinguish them from the protrusions, and it is obvious that the convex portions may be referred to as protrusions. The lines connecting the vertices of the first and second protrusions and the plurality of convex portions 42 may be curved. The lines connecting the vertices of the plurality of protrusions and the plurality of convex portions in each area of the light-shielding member 100 may form a wave pattern.

A plurality of concave portions having a radius of curvature smaller than the radius of curvature of the first and second protrusions may be included between the first and second protrusions. A plurality of concave portions having a radius of curvature larger than the radius of curvature of the first and second protrusions may be included between the first and second protrusions. Here, the concave portions are simply given different names to distinguish them from the recessed portions, and it is obvious that the concave portions may be referred to as recessed portions.

The lines connecting the vertices of the first and second protrusions and the plurality of recessed portions may be curved. The lines connecting the vertices of the plurality of protrusions and the plurality of recessed portions in each area of the light-shielding member 100 may form a wave pattern. Any one of the plurality of protrusions 41 may be formed to have a height of d1 relative to the line connecting adjacent recessed portions. d1 may be 0.15 mm to 0.2 mm. Any one of the plurality of convex portions 42 may be formed to have a height of d2 relative to the line connecting adjacent recessed portions. d2 may be 0.04 mm to 0.05 mm. The angle formed by the line connecting the centers of the circles forming the arcs of the plurality of arc-shaped protrusions and the centers of the circles forming the arcs of the plurality of arc-shaped convex portions may be formed to have an angle of r4. r4 can satisfy 115 to 125 degrees.

As shown in FIGS. 12 to 15, when the conditions for the pattern height, pattern width, pattern curvature radius, and pattern angle are satisfied in the light-shielding member 100, optical performance may be secured while manufacturability may be improved. If the conditions are below the lower limit of each condition, manufacturability may be reduced, and if the conditions exceed the upper limit, optical performance may be degraded, such as by a higher F-number. The pattern height is the straight-line distance from the innermost point of the pattern's inner peak or protrusion to the lowest point of the concave portion.

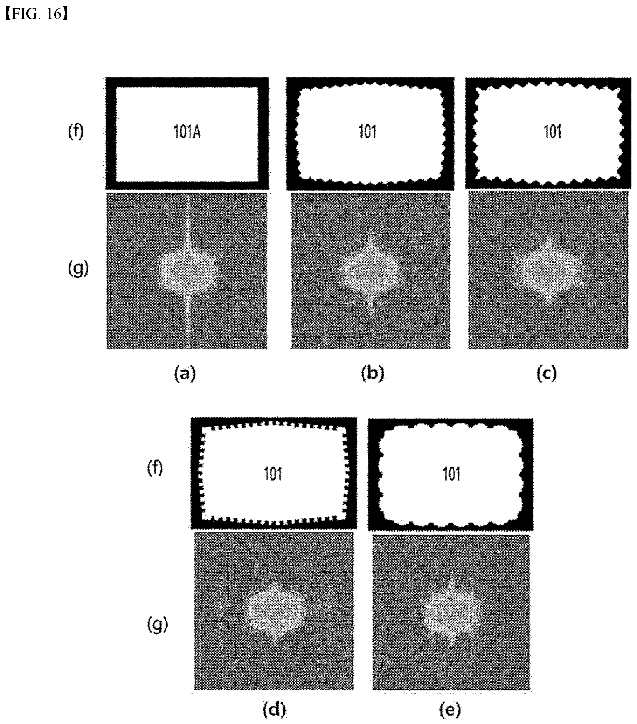

In FIG. 16, (a) is a comparative example, (f) illustrates a shape of the opening 101A of the light-shielding member, and (g) illustrates an example of a flare shape. FIG. 16(b) to (e) illustrate a shape (f) of the opening 101 and flare shape (g) of the light-shielding member of FIGS. 12 to 15. Referring to FIG. 16(a), the comparative example has a structure in which a light-shielding member without a pattern formed on the inner edge is mounted on a reflective member, and the flare shape appears to extend vertically. Referring to FIGS. 16(b) to 16(e), the light-shielding member 100 of the embodiment exhibits a reduced flare phenomenon compared to the light-shielding member of the comparative example.

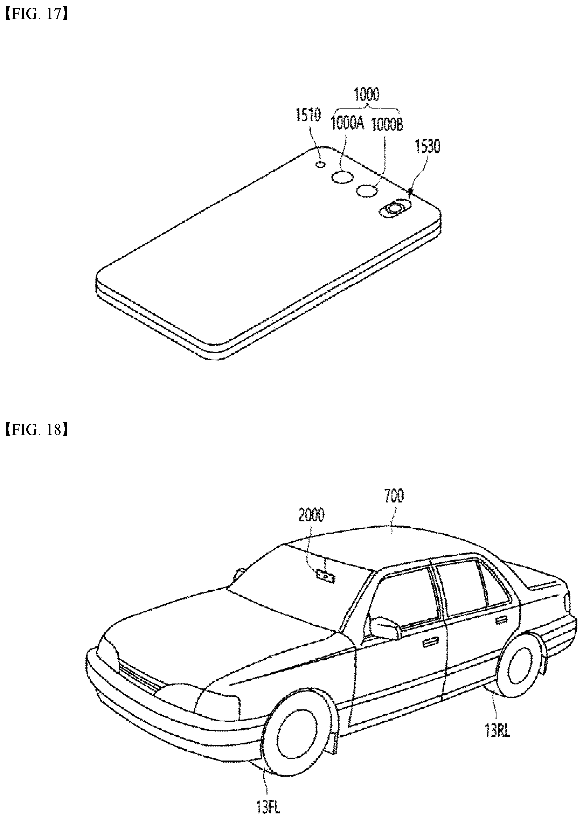

FIG. 17 is a perspective view of a mobile terminal to which a camera module according to an embodiment is applied.

As illustrated in FIG. 17, the mobile terminal 1500 of the embodiment may include a camera module 1000, a flash module 1530, and an auto-focusing device 1510 provided on the rear.

The camera module 1000 may include an image capture function and an auto-focusing function. For example, the camera module 1000 may include an image-based auto-focusing function.

The camera module 1000 processes still or moving image frames captured by an image sensor in shooting mode or video call mode.

The processed image frames may be displayed on a predetermined display or stored in memory. A camera (not shown) may also be positioned on the front of the mobile terminal body.

For example, the camera module 1000 may include a first camera module 1000A and a second camera module 1000B, and the first camera module 1000A may implement optical image stabilization (OIS) along with auto-focusing (AF) or zoom functions.

The flash module 1530 may include a light-emitting element that emits light internally. The flash module 1530 may be activated by the mobile terminal's camera operation or user control.

The auto-focusing device 1510 may include one of a package of surface-emitting laser devices as a light-emitting element. The auto-focusing device 1510 may include an auto-focusing function using a laser. The auto-focusing device 1510 may be primarily used in conditions where the auto-focusing function using the image of the camera module 1000 is degraded, such as at close ranges of 10 m or less or in dark environments.

The auto-focusing device 1510 may include a light-emitting unit including a vertical cavity surface-emitting laser (VCSEL) semiconductor device and a light-receiving unit, such as a photodiode, that converts light energy into electrical energy.

FIG. 18 is a perspective view of a vehicle equipped with a camera module according to an embodiment. FIG. 18 is an exterior view of a vehicle equipped with a vehicle driving assistance device equipped with the camera module 1000 according to an embodiment.

Referring to FIG. 18, the vehicle 700 according to the embodiment may include wheels 13FL and 13RL that rotate by a power source and a predetermined sensor. The sensor may be, but is not limited to, a camera sensor 2000.

The camera 2000 may be a camera sensor equipped with the camera module 1000 according to the embodiment. The vehicle 700 of the embodiment can acquire image information through a camera sensor 2000 that captures forward or surrounding images. Using this image information, the vehicle can determine lane-unidentified situations and, if so, generate virtual lanes.

For example, the camera sensor 2000 captures the front of the vehicle 700 to acquire a forward image, and a processor (not shown) can analyze objects included in this forward image to acquire image information.

For example, if the image captured by the camera sensor 2000 includes objects such as lanes, adjacent vehicles, obstructions, and indirect road markings, such as median strips, curbs, and street trees, the processor can detect these objects and include them in the image information. At this time, the processor can obtain distance information from objects detected by the camera sensor 2000 to further supplement the image information. The image information may include information about objects captured in the image. The camera sensor 2000 may include an image sensor and an image processing module.

The camera sensor 2000 can process still or moving images captured by an image sensor (e.g., CMOS or CCD). The image processing module can process the still or moving images captured by the image sensor, extract necessary information, and transmit the extracted information to the processor. The camera sensor 2000 may include a stereo camera to improve object measurement accuracy and obtain additional information, such as the distance between the vehicle 700 and the object, but is not limited thereto.

While the above description focuses on embodiments, these are merely examples and do not limit the present invention. Those skilled in the art will appreciate that various modifications and applications not illustrated above are possible without departing from the essential characteristics of the present invention. For example, each component specifically illustrated in the embodiments may be modified and implemented. Furthermore, any differences related to such modifications and applications should be construed as being within the scope of the present invention as defined in the appended claims.

**Claims**

1. A camera module comprising:

   a reflective member for reflecting, in a second direction, light incident from a first direction;
   a lens holder having a plurality of lenses aligned along the second direction;
   an image sensor that converts light refracted by the plurality of lenses into an electrical signal; and
   a plurality of spacers disposed on an outer periphery between two adjacent lenses,
   wherein the plurality of spacers includes a first spacer disposed on a periphery of an object-side surface or a sensor-side surface of an n-th or n-1th lens adjacent to the image sensor,
   wherein a shape of an inner hole of the first spacer is non-circular.

2. The camera module of claim 1,

   wherein the first spacer is disposed on the periphery of the object-side surface of the n-th lens,
   wherein the object-side surface and the sensor-side surface of the n-th lens have an effective length in a first direction that is shorter than an effective length in a third direction orthogonal to the first direction.

3. The camera module of claim 2, wherein the object-side surface and the sensor-side surface of the n-1th lens have effective lengths in a first direction that are shorter than effective lengths in the third direction orthogonal to the first direction.

4. The camera module of claim 1, wherein the first spacer is disposed on the periphery of the object-side surface of the n-1th lens, and the object-side surface and the sensor-side surface of the n-1th lens have effective lengths in the first direction that are shorter than effective lengths in a third direction orthogonal to the first direction.

5. The camera module of claim 1, wherein the first spacer is disposed on the periphery of the sensor-side surface of the n-th lens, and the object-side surface and the sensor-side surface of the n-th lens have effective lengths in the first direction that are shorter than effective lengths in a third direction orthogonal to the first direction.

6. The camera module of any one of claims 1 to 5, wherein a maximum effective length of the object-side surface or the sensor-side surface of the n-th or n-1th lens is C1, a minimum effective length is C2, and the following Mathematical formula satisfies: $0.55 < C2 / C1 < 0.98$.

7. The camera module of claim 6, wherein a maximum length of an outer shape of the first spacer is D1, a minimum length is D2, and the following Mathematical formula satisfies: $0.55 < D2 / D1 < 0.98$.

8. The camera module of claim 6, wherein the hole of the first spacer has a maximum length of D3, a minimum length of D4, and the following Mathematical formula satisfies: $0.55 < D4 / D3 < 0.98$.

9. The camera module of claim 6,
   wherein a maximum effective length of an object-side surface of a lens closest to the reflective member among the plurality of lenses is CA11, a maximum effective length of the sensor-side surface of the n-th lens is CA32, and the following Mathematical formula satisfies: $0.55 < CA32 / CA11 < 0.9$.

10. The camera module of claim 9,
    wherein the maximum effective length of the object-side surface of the lens closest to the reflective member is a largest among effective lengths of the lenses.

11. The camera module of any one of claims 1 to 5,
    wherein an optical axis distance between the sensor-side surface of the n-th lens and the image sensor is BFL, and the following condition satisfies: $2\ mm < BFL < 10\ mm$.

12. The camera module of claim 11,

    wherein an effective focal length of the camera module is EFL, and
    wherein the following condition satisfies: $7\ mm < EFL < 35\ mm$.

13. The camera module of claim 12,

    wherein the plurality of lenses comprises: a first lens group adjacent to the reflective member and having at least one lens;
    a second lens group having at least one lens on a sensor side of the first lens group and movable along an optical axis; and
    wherein a third lens having the n-th and n-1th lenses on a sensor side of the second lens group and movable along the optical axis;
    wherein a length of the hole of the spacer in a short axis direction is D0, a length of the image sensor in the first direction is V1, and
    wherein the following Mathematical formula satisfies: $0.6 < D0/V1 < 1.5$.

14. The camera module of any one of claims 1 to 5, comprising:

    a light-shielding member disposed on an incident surface or an exit surface of the reflective member and having an opening on an inside,
    wherein the light-shielding member includes a plurality of protrusions spaced apart from each other at an inner edge end; and a plurality of recessed portions spaced apart from each other at the inner edge end,
    wherein the plurality of protrusions and the recessed portions intersect each other,
    wherein an end of the inner edge includes a first area and a second area forming a first corner of the opening,
    wherein an angle formed by a line connecting vertices of the plurality of protrusions in the first area and a line connecting vertices of the plurality of protrusions in the second area is an obtuse angle,
    wherein an angle formed by a line connecting the vertices of the plurality of recessed portions in the first area and a line connecting the vertices of the plurality of recessed portions in the second area is an obtuse angle.

15. 16. An electronic device including a camera module according to any one of claims 1 to 5.

【FIG. 1】

1000

【FIG. 2】

【FIG. 3】

【FIG. 4】

【FIG. 5】

【FIG. 6】

【FIG. 7】

【FIG. 8】

【FIG. 9】

【FIG. 10】

【FIG. 11】

(A)　　　　　　　　　　　　　　　　　　(B)

【FIG. 12】

【FIG. 13】

【FIG. 14】

【FIG. 15】

【FIG. 16】

【FIG. 17】

【FIG. 18】

## INTERNATIONAL SEARCH REPORT

| International application No. |
|---|
| **PCT/KR2024/003041** |

### A. CLASSIFICATION OF SUBJECT MATTER

**G02B 5/00**(2006.01)i; **G02B 5/08**(2006.01)i; **H04N 23/55**(2023.01)i; **H04N 23/57**(2023.01)i; **H04N 23/54**(2023.01)i; **G03B 17/12**(2006.01)i; **G03B 30/00**(2021.01)i; **G03B 17/17**(2006.01)i; **G02B 7/02**(2006.01)i

According to International Patent Classification (IPC) or to both national classification and IPC

### B. FIELDS SEARCHED

Minimum documentation searched (classification system followed by classification symbols)

G02B 5/00(2006.01); G02B 7/02(2006.01); G03B 17/02(2006.01); G03B 17/12(2006.01); H04N 23/55(2023.01); H04N 5/225(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 카메라(camera), 렌즈(lens), 스페이서(spacer), 플레어(flare), 및 다각형(polygon)

### C. DOCUMENTS CONSIDERED TO BE RELEVANT

| Category* | Citation of document, with indication, where appropriate, of the relevant passages | Relevant to claim No. |
|---|---|---|
| Y | KR 10-2014-0146980 A (SAMSUNG ELECTRO-MECHANICS CO., LTD.) 29 December 2014 (2014-12-29)<br>See paragraphs [0002]-[0003] and [0034]-[0114] and figures 1-7. | 1-15 |
| Y | KR 10-2022-0119587 A (SAMSUNG ELECTRO-MECHANICS CO., LTD.) 30 August 2022 (2022-08-30)<br>See paragraphs [0038]-[0063], [0121]-[0152] and [0290]-[0353] and figures 1-2 and 19-29c. | 1-15 |
| Y | US 2021-0041606 A1 (LARGAN PRECISION CO., LTD.) 11 February 2021 (2021-02-11)<br>See paragraphs [0002] and [0061]-[0063] and figures 1A-1B. | 14 |
| A | KR 10-2023-0028347 A (SAMSUNG ELECTRO-MECHANICS CO., LTD.) 28 February 2023 (2023-02-28)<br>See paragraphs [0013]-[0084] and figures 1-21. | 1-15 |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 June 2024** | **13 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2024/003041** |

**C.    DOCUMENTS CONSIDERED TO BE RELEVANT**

| Category* | Citation of document, with indication, where appropriate, of the relevant passages | Relevant to claim No. |
|---|---|---|
| A | JP 2006-133344 A (SONY CORP.) 25 May 2006 (2006-05-25)<br>See paragraphs [0007]-[0035] and figures 1-27. | 1-15 |

Form PCT/ISA/210 (second sheet) (July 2022)

EP 4 679 144 A1

| Patent document cited in search report | | | Publication date (day/month/year) | Patent family member(s) | | | Publication date (day/month/year) |
|---|---|---|---|---|---|---|---|
| KR | 10-2014-0146980 | A | 29 December 2014 | CN | 104238063 | A | 24 December 2014 |
| | | | | KR | 10-1504030 | B1 | 18 March 2015 |
| | | | | US | 2014-0368723 | A1 | 18 December 2014 |
| KR | 10-2022-0119587 | A | 30 August 2022 | CN | 112526709 | A | 19 March 2021 |
| | | | | CN | 112526709 | B | 02 September 2022 |
| | | | | CN | 115220195 | A | 21 October 2022 |
| | | | | CN | 212905673 | U | 06 April 2021 |
| | | | | KR | 10-2021-0027188 | A | 10 March 2021 |
| | | | | KR | 10-2435997 | B1 | 25 August 2022 |
| | | | | TW | 202122862 | A | 16 June 2021 |
| | | | | TW | 202223483 | A | 16 June 2022 |
| | | | | TW | 202332953 | A | 16 August 2023 |
| | | | | TW | I758840 | B | 21 March 2022 |
| | | | | TW | I802260 | B | 11 May 2023 |
| | | | | US | 11852896 | B2 | 26 December 2023 |
| | | | | US | 2021-0063687 | A1 | 04 March 2021 |
| | | | | US | 2024-0094504 | A1 | 21 March 2024 |
| US | 2021-0041606 | A1 | 11 February 2021 | CN | 108508679 | A | 07 September 2018 |
| | | | | CN | 108508679 | B | 18 December 2020 |
| | | | | CN | 112433419 | A | 02 March 2021 |
| | | | | CN | 112433419 | B | 25 March 2022 |
| | | | | TW | 201831976 | A | 01 September 2018 |
| | | | | TW | 201839488 | A | 01 November 2018 |
| | | | | TW | I633381 | B | 21 August 2018 |
| | | | | TW | I649608 | B | 01 February 2019 |
| | | | | US | 10228497 | B2 | 12 March 2019 |
| | | | | US | 10845507 | B2 | 24 November 2020 |
| | | | | US | 11719863 | B2 | 08 August 2023 |
| | | | | US | 2018-0246260 | A1 | 30 August 2018 |
| | | | | US | 2019-0154887 | A1 | 23 May 2019 |
| | | | | US | 2023-0333291 | A1 | 19 October 2023 |
| KR | 10-2023-0028347 | A | 28 February 2023 | CN | 113253421 | A | 13 August 2021 |
| | | | | CN | 113253421 | B | 21 July 2023 |
| | | | | CN | 114609765 | A | 10 June 2022 |
| | | | | CN | 213659075 | U | 09 July 2021 |
| | | | | KR | 10-2021-0102012 | A | 19 August 2021 |
| | | | | TW | 202131048 | A | 16 August 2021 |
| | | | | TW | 202344886 | A | 16 November 2023 |
| | | | | TW | I812876 | B | 21 August 2023 |
| | | | | US | 2021-0247592 | A1 | 12 August 2021 |
| JP | 2006-133344 | A | 25 May 2006 | JP | 4863040 | B2 | 25 January 2012 |

Form PCT/ISA/210 (patent family annex) (July 2022)

**INTERNATIONAL SEARCH REPORT**
Information on patent family members

International application No.

**PCT/KR2024/003041**